# EUROPÄISCHE PATENTSCHRIFT

(11) **EP 0 389 060 B1**
(45) Veröffentlichungstag und Bekanntmachung des Hinweises auf die Patenterteilung: **20.07.1994**
(21) Anmeldenummer: 90200662.6
(22) Anmeldetag: 20.03.1990
(51) Int. Cl.: C09D 7/12, B05D 3/10, E01F 9/04

(54) **Streufähiges körniges Material, Verfahren zu dessen Herstellung sowie Verfahren zu dessen Verwendung zur Herstellung einer Deckschicht im Strassenbau oder zur Herstellung von Strassenmarkierungen**
Pourable granular material, method of making it, method of using it in the manufacture of top layer in the road construction or in making road marks
Matériau en grain répandable, son procédé de préparation ainsi que son procédé d'utilisation à la préparation d'une couche de dessus en construction routière ou à la préparation de marquages de routes

(30) Priorität: 20.03.1989 FR 8903601
(43) Veröffentlichungstag der Anmeldung: 26.09.1990
(73) Patentinhaber: VELUVINE B.V., NL-4824 AG Breda (NL)
(72) Erfinder: Van der Klaauw, Johannes Petrus, NK-4758 TD Standdaarbuiten (NL)
(74) Vertreter: Smulders, Theodorus A.H.J., Ir.

(56) Entgegenhaltungen:
- EP-A- 0 165 906
- US-A- 4 360 446

## Beschreibung

Die Erfindung bezieht sich auf ein streufähiges körniges Material, geeignet zum Härten von flüssigen Bindemitteln, die auf Substratoberflächen auf gebracht sind. Diese Substratoberflächen können z.B. Wandflächen, Hausfassaden, Bahnsteige, Treppen usw. sein.

Insbesondere betrifft die Erfindung auch ein streufähiges Griffigkeitsmittel und/oder Reflexionsmittel für Farbmarkierungen auf Verkehrsflächen, das gleichzeitig Härtung eines vorher aufgebrachten härtbaren flüssigen Bindemittels bewirken kann. Verkehrflächen, Parkplätze, sowie Fahrbahnen in Fabrikgeländen müssen umfangreich durch Auftragen von weißen, gelben oder auch andersfarbigen Markierungsfarben markiert werden. Diese Markierungsfarben müssen in kürzester Zeit aushärten bzw. zumindest trocknen, so daß sie in der Regel bereits nach wenigen Minuten oder höchstens Stunden befahren werden können. Im allgemeinen werden für hochwertige Markierungen sogenannte Zweikomponenten-Farben verwendet. Die beiden Komponenten sind einzeln lange lagerfähig. Nach dem Vermischen tritt durch chemische Reaktion sehr schnell eine Härtung ein, wobei die Komponenten so gewählt werden, daß die Härtung kalt d. h. bei Raumtemperatur ohne zusätzliche weitere Maßnahmen, wie Erhitzen, Bestrahlen mit energiereicher Strahlung und dergleichen erfolgen kann. Gemäß einer Arbeitsweise werden beide Komponenten im notwendigen Mischungsverhältnis um eine einwandfreie chemische Reaktion zur Härtung zu gewährleisten mittels Dosierpumpen bzw. Förderpumpen Mischvorrichtungen zugeführt, wo eine Homogenisierung erfolgt. Unmittelbar anschließend wird das Gemisch mit Farbpistolen, z.B. Airless-Pistolen appliziert. Um die geforderten Griffigkeits- und Reflexionswerte auf Straßen oder Flughäfen zu ergeben, müssen Nachstreumittel, insbesondere Glasperlen, Sand und Mittel mit porösen Oberflächen in das flüssige Material mittels Walzenstreuer oder Spritzpistole ein- bzw. aufgebracht werden. Nach einer anderen bekannten Verfahrensweise wird die eigentliche Farbkomponente im konventionellen Spritzverfahren auf die Verkehrsfläche aufgebracht und die Härterkomponente in Pulverform, gegebenenfalls in Abmischung mit Griffigkeitsmitteln und Glasperlen mit einem Walzengerät nachgestreut. Durch das niedrige spezifische Gewicht der Härter, z.B. der Peroxide sind Verwehungen durch Windbeeinflussung möglich. Daraus resultiert, daß die eingestellte Nachstreumittelmenge nicht konstant eingehalten werden kann, ein relativ hoher Materialverlust beim Streumittelauftrag eintritt und eine ungleichmäßige Härtung erzielt wird. Um derartigen Nachteilen abzuhelfen, wurden Verfahren und Vorrichtungen zum Markieren von Verkehrsflächen durch Antrag von kalthärtenden Zweikomponenten-Farben und gegebenenfalls Griffigkeitsmitteln und Reflexionsmitteln bereitgestellt.

Bei dem Verfahren der EPA 00 74 494 sind beispielsweise die Härterkomponenten in Form einer Lösung oder Dispersion aufgebracht. Unmittelbar anschließend oder nach mehreren Stunden wird die zweite Komponente aufgebracht, die nach Vermischen mit der ersten Komponente ein kalthärtendes Bindemittel ergibt. Gegebenenfalls können noch Pigmente und unmittelbar anschließend Griffigkeitsmittel und/oder Glasperlen aufgetragen werden. Bei einer derartigen Verfahrensweise ist eine große Härtermenge erforderlich, die Schichtdicke ist begrenzt und es ist ein mehrfacher Auftrag der Komponenten notwendig.

Aus EP-A-0 165 906 ist es bekannt, Straßenmarkierungen herzustellen, bei denen ein flüssiges Bindemittel und auch ein Griffigkeits- oder Reflexionsmittel aufgebracht wird, das mit einem Katalysator zum Härten des Bindemittels, z.B. Benzoylperoxid, beschichtet ist. Für dieses Beschichten wird ein organisches Lösungsmittel verwendet, vorzugsweise Azeton, das man danach verflüchtigen läßt. Dieses bekannte Verfahren hat als Nachteile, daß ein organisches Lösungsmittel verwendet wird, das nachher verflüchtigt werden muß, daß in der Regel eine gute Haftung nur dann erreicht werden kann, wenn das Kernmaterial einigermaßen porös ist oder wenigstens eine rauhe Oberfläche aufweist, und daß nicht unter allen Umständen ein freiflüssiges Produkt erhalten wird, das seine freifließende Eigenschaften während langer Zeit beibehält.

Es ist jetzt gefunden worden, daß die obengenannten Nachteile behoben werden können, wenn das körnige Material aus einem festen Kernmaterial besteht, an das Dibenzoylperoxid mit Hilfe eines bei Raumtemperatur festen Weichmachers gebunden ist.

Die Erfindung bezieht sich auch auf ein Verfahren zur Herstellung eines solchen streufähigen körnigen Materials wie weiter beschrieben sowie auf die Verwendung dieses Materials, insbesondere bei der Herstellung einer Deckschicht im Straßenbau oder zur Herstellung von Straßenmarkierungen.

Das vorliegende streufähige körnige Material mit z.B. einem Griffigkeitsmittel und/oder Reflexionsmittel als festem Kernmaterial weist den Vorteil auf, daß es in einem einmaligen Auftrag auf das auf die Oberfläche, z.B. Verkehrsfläche, aufgebrachte flüssige Bindemittel aufgebracht werden kann und die Doppelfunktion des Härters (Dibenzoylperoxid) und der Verleihung von Farbe, Struktur, Griffigkeit bzw. Reflexionsvermögen aufweist. Es lassen sich hierdurch mehrfache Aufträge verschiedener fester und/oder flüssiger Schichten vermeiden. Darüber hinaus ergibt sich eine günstige Dosierungsmöglichkeit; es hat sich gezeigt, daß wesentlich geringere Härtermengen bezogen auf das eingesetzte Bindemittel notwendig sind als sie bisher erforderlich waren. Durch die starke Bindung des Härtermittels an den relativ schweren Füllstoff besteht die Gefahr von Windverwehungen nicht. Es hat sich auch gezeigt, daß eine ausgezeichnete Durchhärtung mit Bindung des Kernmaterials, wie z.B. des Griffigkeitsmittels und/oder Reflexionsmittels, an das Bindemittelsystem bewirkt wird. Außerdem können durch den Einsatz des Härters, gebunden am Kernmaterial mit hohem spezifischem Gewicht, größere Schichtdecken des flüssigen Bindemittels härten, da die schweren Partikeln mit dem Härter in die Bindemittelschicht eindringen und im Gegensatz zum leichten, auf der Bindemittelschicht schwimmenden Härter ohne Kernmaterial eine vollständige Durchhärtung ermöglichen.

Als Kernmaterial für den Härter werden erfindungsgemäß übliche streufähige feste Kernmateriale, wie z.B. Griffigkeitsmittel und/oder Reflexionsmittel eingesetzt. Streufähige Kernmateriale, wie Griffigkeitsmittel sind beispielsweise Sand, gesinterter Sand (z.B. Cristobalitsand), Quarzmehl, kalzinierter Flintstein. Beispiele von kalziniertem Flintstein sind das Handelsprodukt "Luxovit" der Fa. Superfos (Dänemark) und das Handelsprodukt "Minigrain" der Fa. Sanson (Frankreich). Derartige Füllstoffe und insbesondere der erfindungsgemäß insbesondere als Griffigkeitsmittel bevorzugte Flintstein weisen im allgemeinen Korngrößen von 0,5 bis 2,5 mm auf. Als streufähiges Reflexionsmittel kommen z.B. Glasperlen in Frage. Vorzugsweise weisen diese Korngrößen von 0,1 bis 0,8 mm auf.

Übliche Anstrichmittel, die durch Dibenzoylperoxid gehärtet werden können, sind solche auf Acrylbasis und/oder auf der Basis ungesättigter Polyester, bzw. Polyester- oder Acrylpolymere, gelöst in Acrylsäure- oder Methacrylsäureester-Monomeren. Derartige Systeme sind dem Fachmann geläufig und bedürfen keiner weiteren Erläuterung. Es sind alle üblichen derartigen Anstrichmittel geeignet.

Es ist auch möglich, Beschleuniger für den Härter zu verwenden. Diese werden dann dem Bindemittel bzw. dem Anstrichmittel zugesetzt. Beispiele für Beschleuniger sind solche auf Aminbasis, wie Dimethylanilin, Dimethyl-p-toluidin, Diethylanilin, Dihydroxydiethyl-p-toluidin.

Der Härter wird mit Hilfe eines bei Raumtemperatur festen Weichmachers auf das feste Kernmaterial aufgebracht. Die Methode besteht darin, dass ein Gemisch aus Kernmaterial, z.B. Glasperlen und/oder kalziniertem Flintstein; Dibenzoylperoxid als Härter; und einem bei Raumtemperatur festen kristallinen Weichmacher, dessen Schmelzpunkt niedriger als der Zersetzungstemperatur des Härters ist, auf eine derartige Temperatur erwärmt wird, daß der Weichmacher im geschmolzenen Zustand vorkommt, aber diese Temperatur soll niedriger als die Zersetzungstemperatur des Härters sein. Darauf wird das Gemisch gekühlt, wodurch eine einfache Schicht aus Härter in dem jetzt festen Weichmacher auf der Oberfläche des Kernmaterials gebildet wird. In der Weise werden feine Kristalle des Peroxids zusammen mit dem Weichmacher auf die Oberfläche des Kernmaterials abgesetzt. Ein geeigneter fester Weichmacher zur Anwendung in Kombination mit Dibenzoylperoxid ist Dicyclohexylphthalat. Die Menge Härter beträgt gewöhnlich 2 bis 10 und vorzugsweise 4 bis 8 Gewichtsprozent, berechnet auf die Gesamtmischung, während der Härter und der bei Raumtemperatur feste Weichmacher üblicherweise in einem relativen Gewichtsverhältnis zwischen 7 : 3 und 3 : 7 angewendet werden. Ein in dieser Weise mit Dibenzoylperoxid bekleidetes Kernmaterial besitzt ausgezeichnete und dauerhafte freifließende Eigenschaften, was dieses Material für industrielle Verwertung sehr geeignet macht.

Die erfindungsgemäßen Abstreumittel können auch gefärbt sein. So kann beispielweise das Kernmaterial eine Färbung aufweisen. Es ist jedoch auch möglich, zusammen mit dem Härter, ein Pigment aufzubringen. Es ist auf diese Weise möglich, verschiedene Färbungen herzustellen, wobei die Pigmentierung der Abstreumittel gleich oder unterschiedlich von der der zu härtenden Bindemittel sein kann.

Das erfindungsgemäß bereitgestellte streufähige körnige Material kann in üblicher Weise aufgetragen werden, z.B. mit Walzenstreuer, Perlpistole oder einer Kombination von beiden, wie beispielsweise mit Vorrichtungen, die in EP-A-0 074 494 oder in der DE-A-21 60 311 beschrieben werden.

Zur Erzielung einer Verkehrsflächen-Markierung wird zunächst das Anstrichmittel aufgetragen. Anschließend wird mit dem streufähigen mit Härter behandelten erfindungsgemäßen Griffigkeits- und/oder Reflexionsmittel behandelt. Der Auftrag des Griffigkeits- und/oder Reflexionsmittels kann selbstverständlich auch im Gemisch mit nichtbehandelten entsprechenden Mitteln erfolgen. Eine weitere Auftragsmöglichkeit besteht im gleichzeitigen Abspritzen und Aufstreuen von Bindemittel bzw. Griffigkeits- und/odere Reflexionsmittel durch getrennte Düsensysteme.

Andere Flächen, wie Fassaden oder Wände, Treppen und Böden, Wege und Bahnsteige können z.B. mit dem flüssigen Bindemittel behandelt werden, worauf das erfindungsgemäße körnige Material mit üblichen Vorrichtungen aufgespritzt wird.

Das erfindungsgemäße körnige Material ist ein dauerhaftes freifließendes Produkt, das sehr einfach hergestellt werden kann, und das für das schnelle Härten einer Schicht aus flüssigem Bindemittel sehr wirksam ist, wobei eine erhebliche kleinere Menge Härter als bisher erforderlich ausreicht.

### Beispiel 1

Ein Gemisch aus 90 Gew. Tln Glasperlen (Korngröße 0,1 - 0,6 mm) und 10 Gew. Tln Lucidol CH 50 (Dibenzoylperoxid /Dicyclohexylphthalat 50/50; Handelsprodukt der Fa. AKZO Chemie, Niederlande) wird in einem Mischer auf 67°C erwärmt. Bei dieser Temperatur schmilzt das Dicyclohexylphthalate und wird das Dibenzoylperoxid in Form einfacher Kristalle gleichmäßig darin verteilt. Sodann wird gekühlt, wodurch das Dicyclohexylphthalat auf der Oberfläche der Glasperlen kristallisiert unter Bildung einer festen narten Bekleidung, welche die Dibenzoylperoxidkristalle enthält. In dieser Weise wird ein dauerhaftes freifließendes Produkt erhalten, das sich leicht handhaben läßt.

Auf einer Fahrbahn wird in üblicher Weise ein weiß pigmentierter Acrylatanstrich (Acrylharz Plexilith 421 der Röhm GmbH) aufgebracht, (Lösung eines Acrylharzes in Acrylestern), (Schichtdicke 600 »m). Unmittelbar anschließend wird das vorstehend bereitete Produkt satt abgestreut (so daß die Acrylatoberfläche völlig bedeckt ist). Man erhält auf diese Weise einen gehärteten Anstrich nach einer Trocknungszeit von 10 Minuten.

### Beispiel 2

Das in Beispiel 1 beschriebene Verfahren wird wiederholt, aber statt Glasperlen wird jetzt Luxovit 0,5 - 1 (gesintertes Flintsteinpulver mit einer Korngröße von 0,5 bis 1 mm; Handelsprodukt der Fa. Superfos Dammann-Luxol, Dänemark) angewendet. Das so erhaltene Produkt ist gleichfalls dauerhaft freifließend und leicht handhabbar.

Durch Abstreuen des Produktes auf einen Anstrich, wie beschrieben im Beispiel 1, wird gleichfalls nach kurzer Zeit ein gehärteter Anstrich erhalten.

### Beispiel 3

Das im Beispiel 1 beschriebene Verfahren wird nochmals wiederholt, aber jetzt mit einem 50/50 Gemisch aus den dort beschriebenen Glasperlen und Luxovit 0,5 - 1. Das erhaltene Produkt ist freifließend und gut haltbar.

Durch Abstreuen dieses Produktes auf einen Anstrich, wie beschrieben im Beispiel 1, wird nach kurzer Zeit ein gehärteter Anstrich erhalten.

### Beispiel 4

Das im Beispiel 2 beschriebene Verfahren wird wiederholt, aber es wird von einem Gemisch ausgegangen, bestehend aus 86 Gew. Tln Luxovit 0,5 - 1, 10 Gew. Tln Lucidol CH 50 und 4 Gew. Tln rotem Eisenoxidpigment. Es wird ein rot gefärbtes Produkt erhalten, das freifließend und leicht handhabbar ist.

Das so erhaltene Produkt wird auf die im Beispiel 1 beschriebene Weise abgestreut auf einen Acrylatanstrich derselben Art wie im Beispiel 1 beschrieben, jedoch ohne Pigment. So wird nach einer kurzen Trocknungszeit von rund 10 Minuten eine rot gefärbte Markierung erhalten, die z.B. einen Fahrradweg angeben kann.

### Beispiel 5

Ein Gemisch aus 95 Tln Bauxit (2-3 mm) und 5 Tln Lucidol CH 50 (50% Dibenzoylperoxid - 50% Dicyclohexylphthalat) wird in einem doppelwandigen Mischer auf 70°C erwärmt and anschließend gekühlt. Nach Abkühlung ist ein freifließendes Gemisch aus Bauxit erhalten worden, das mit einer gleichmäßigen Schicht Lucidol CH 50 überzogen ist. Eine Grundschicht, bestehend aus 80 Tln Degaroute 460 und 20 Tln Weichmacher (einem Chlorparaffin) wird auf die Straßendecke aufgebracht und mit dem überzogenen Bauxit satt abgestreut. Nach etwa 20 Minuten wird der Überschuß an Bauxit entfernt und ist eine starke Deckschicht erhalten worden.

## Patentansprüche

1. Streufähiges körniges Material, geeignet zum Härten von flüssigen Bindemitteln, die auf Substratoberflächen aufgebracht sind, dadurch gekennzeichnet, daß das körnige Material aus einem festen Kernmaterial besteht, an das Dibenzoylperoxid mit Hilfe eines bei Raumtemperatur festen Weichmachers, dessen Schmelzpunkt niedriger ist als die Zersetzungstemperatur des Dibenzoylperoxids, gebunden ist.

2. Streufähiges körniges Material nach Anspruch 1, dadurch gekennzeichnet, daß das Kernmaterial aus einem Griffigkeitsmittel und/oder Reflexionsmittel besteht.

3. Streufähiges körniges Material nach Anspruch 1 oder 2, dadurch gekennzeichnet, daß das Kernmaterial mit einer einfachen Schicht aus Dibenzoylperoxid und festem Weichmacher beschichtet ist.

4. Streufähiges körniges Material nach Ansprüchen 1 bis 3, dadurch gekennzeichnet, daß der feste Weichmacher aus Dicyclohexylphthalat besteht.

5. Streufähiges körniges Material nach Ansprüchen 1 bis 4, dadurch gekennzeichnet, daß die Beschichtung aus Dibenzoylperoxid und festem Weichmacher auch ein Pigment enthält.

6. Verfahren zur Herstellung eines streufähigen körnigen Materials nach Ansprüchen 1 bis 5, dadurch gekennzeichnet, daß man das feste Kernmaterial, Dibenzoylperoxid und den bei Raumtemperatur festen Weichmacher bei einer Temperatur, die höher als die Schmelztemperatur des festen Weichmachers, aber niedriger als die Zersetzungstemperatur von Dibenzoylperoxid ist, zusammenbringt, die Komponenten bei dieser Temperatur unter solchen Bedingungen beibehält, daß eine gleichmäßige Verteilung von Dibenzoylperoxid und Weichmacher über die Oberfläche des Kernmaterials erfolgt, und das Gemisch anschließend kühlt.

7. Verfahren zur Herstellung einer Deckschicht im Straßenbau oder zur Herstellung von Straßenmarkierungen, dadurch gekennzeichnet, daß man eine flüssige Schicht auf die gewünschten Stellen aufbringt und darauf dann ein streufähiges körniges Material nach Ansprüchen 1 bis 5, oder hergestellt nach Anspruch 6, aufstreut.

## Claims

1. A pourable granular material suitable for hardening of liquid agglutinants applied to substrate surfaces, characterised in that the granular material consists of a solid basic material with which dibenzoylperoxide is combined with the aid of a softening agent, which is solid at room temperature and which has a melting point lower than the decompositional temperature of the dibenzoylperoxide.

2. A pourable granular material according to claim 1, characterised in that the basic material is a gripping medium and/or a reflective medium.

3. A pourable granular material according to claim 1 or 2, characterised in that the basic material is coated with a single layer of dibenzoylperoxide and solid softening agent.

4. A pourable granular material according to claims 1 to 3, characterised in that the solid softening agent consists of dicyclohexylphthalate.

5. A pourable granular material according to claims 1 to 4, characterised in that the coating of dibenzoylperoxide and solid softening agent also contains a pigment.

6. A method of making a pourable granular material according to claims 1 to 5, characterised in that the solid basic material, dibenzoylperoxide and the softening agent which is solid at room temperature are brought together at a temperature which is higher than the melting temperature of the solid softening agent but lower than the decompositional temperature of dibenzoylperoxide, and which retains the components at this temperature under conditions such that a uniform distribution of dibenzoylperoxide and softening agent is obtained across the surface of the basic material, and that the mixture subsequently cools.

7. A method of forming a top layer in road construction or of forming road markings, characterised in that a liquid layer is applied to the desired areas and then a pourable granular material according to claims 1 to 5, or formed according to claim 6, is poured on top.

## Revendications

1. Matériau granuleux capable de dispersion, adapté au durcissement par des liants liquides appliqués sur des surfaces de substrat, caractérisé en ce que le matériau granuleux se compose d'un matériau central solide, sur lequel du peroxyde de dibenzoyle est lié à l'aide d'un plastifiant solide à température ambiante, dont le point de fusion est plus bas que la température de décomposition du peroxyde de dibenzoyle.

2. Matériau granuleux capable de dispersion selon la revendication 1, caractérisé en ce que le matériau central se compose d'un substance antidérapante et/ou d'une substance réfléchissante.

3. Matériau granuleux capable de dispersion selon la revendication 1 ou 2, caractérisé en ce que le matériau central est recouvert d'une couche simple de peroxyde de dibenzoyle et de plastifiant solide.

4. Matériau granuleux capable de dispersion selon l'une quelconque des revendications 1 à 3, caractérisé en ce que le plastifiant solide se compose de dicyclohexylphtalate.

5. Matériau granuleux capable de dispersion selon l'une ou l'ensemble des revendications 1 à 5, caractérisé en ce que le revêtement de peroxyde de dibenzoyle et de plastifiant solide contient également un pigment.

6. Procédé pour la fabrication d'un matériau granuleux capable de dispersion selon l'une ou l'ensemble des revendications 1 à 5, caractérisé en ce que le matériau central solide, le peroxyde de dibenzoyle et le plastifiant solide à température ambiante sont réunis à une température plus élevée que la température de fusion du plastifiant solide, mais plus basse que la température de décomposition du peroxyde de dibenzoyle, les composants sont maintenus à cette température dans des conditions telles qu'il en résulte une répartition uniforme du peroxyde de dibenzoyle et du plastifiant à la surface du matériau central et le mélange refroidit ensuite.

7. Procédé pour la production d'une couche de surface dans la construction de routes ou pour la fabrication de marquages au sol, caractérisé en ce qu'une couche liquide est appliquée aux endroits souhaités et un matériau granuleux capable de dispersion selon les revendications 1 à 5, ou fabriqué selon la revendication 6, est répandu sur celle-ci.
